# EUROPÄISCHE PATENTANMELDUNG

(11) **EP 2 322 837 A2**
(43) Veröffentlichungstag der Anmeldung: **18.05.2011**
(21) Anmeldenummer: 10014536.6
(22) Anmeldetag: 12.11.2010
(51) Int. Cl.: F16M 11/00

(54) **Bildschirmständer mit einem Flachbildschirm**

(30) Priorität: 12.11.2009 DE 202009015421 U
(71) Anmelder: Impuls TV Beteiligungs- und Verwaltungs GmbH, 60314 Frankfurt / M (DE)
(72) Erfinder: Rößler, Christian, 60439 Frankfurt /M. (DE)
(74) Vertreter: Körner, Volkmar Horst

(57) **Zusammenfassung**

Bei einem Bildschirmständer wird ein Flachbildschirm (2) in einer Halterung mit Seitenträgern (3, 4) und Querträgern (7) gehalten. An den Flachbildschirm grenzt eine Blende (5) an. Die Querträger (7) sind in ihrer Länge und ihrer Position zu den Seitenträgern (3, 4) verstellbar.

## Beschreibung

Die Erfindung betrifft einen Bildschirmständer mit einem Flachbildschirm, mit einem Fuß und mit einer Halterung zur Abstützung des Flachbildschirms auf dem Fuß.

Solche Bildschirmständer mit Flachbildschirmen werden auf Messeständen oder in Verkaufsräumen zur Präsentation von Waren und Dienstleistungen häufig eingesetzt und sind aus der Praxis bekannt. Beispielsweise ist die Halterung bei aus der Praxis bekannten Bildschirmständern häufig als Säule ausgebildet. Solche Bildschirmständer sind jedoch nur bedingt geeignet, den Blick des Betrachters auf die Anzeige des Flachbildschirms zu lenken.

Der Erfindung liegt das Problem zugrunde, einen Bildschirmständer der eingangs genannten Art so weiter zu bilden, dass er von der Anzeige des Flachbildschirms ablenkende optische Einflüsse auf einen Betrachter vermeidet.

Dieses Problem wird erfindungsgemäß dadurch gelöst, dass die Halterung zwei den Flachbildschirm seitlich einfassende Seitenträger hat, dass die Seitenträger über Querträger miteinander verbunden sind und dass auf einer Vorderseite ein Abschnitt zwischen Flachbildschirm und Fuß eine Blende aufweist.

Durch diese Gestaltung ist der Flachbildschirm von den Seitenträgern und der Blende eingefasst, wodurch dem Betrachter der Blick unter und seitlich an dem Flachbildschirm vorbei versperrt wird. Weiterhin werden mögliche störende Anschlusskabel von der Blende verdeckt. Hierdurch vermeidet der erfindungsgemäße Bildschirmständer Ablenkungen von der Anzeige des Flachbildschirms. Der Blick des Betrachters wird dank der Erfindung auf die Anzeige des Flachbildschirms gelenkt. Der erfindungsgemäße Bildschirmständer ist zudem auf Messe- und Verkaufsständen ständen als Sichtblende geeignet.

Der erfindungsgemäße Bildschirmständer vermag die auf dem Flachbildschirm dargestellten Informationen weiter zu veranschaulichen oder dem Betrachter zusätzliche Hinweise zu geben, wenn die Blende eine Anzeigetafel aufweist. Im einfachsten Fall ist die Anzeigetafel eine Plakatwand, welche beispielsweise das Logo eines Unternehmens oder das auf dem Flachbildschirm dargestellte Produkt anzeigt.

Der erfindungsgemäße Bildschirmständer lässt sich einfach aus Einzelteilen zusammenstellen, wenn die Seitenträger zumindest zwei lösbar miteinander verbundene Seitenträgerabschnitte haben, wenn einer der Seitenträgerabschnitte sich über die Höhe des Flachbildschirms erstreckt und der andere der Seitenträgerabschnitte mit dem Fuß verbunden ist. Diese Gestaltung ermöglicht zudem die Platz sparende Lagerung des erfindungsgemäßen Bildschirmständers.

Der erfindungsgemäße Bildschirmständer lässt sich besonders vielseitig einsetzen, wenn ein Zwischenelement zwischen den Seitenträgerabschnitten eingesetzt ist und den Flachbildschirm von der darunter liegenden Blende trennt. Dieses Zwischenelement kann beispielsweise eine Prospekt- oder Aktenablage aufweisen. Weiterhin ermöglicht das Zwischenelement die Anpassung der Höhe des Flachbildschirms auf den vorgesehenen Einsatzzweck.

Zur weiteren Erhöhung der Vielseitigkeit des erfindungsgemäßen Bildschirmständers trägt es bei, wenn ein Kopfelement auf den vom Fuß abgewandten Enden der Seitenträger befestigt ist und bündig mit dem Flachbildschirm abschließt. In diesem Kopfelement lässt sich beispielsweise eine Kamera einsetzen oder eine weitere Blende anbringen.

Der erfindungsgemäße Bildschirmständer lässt sich mit verschiedenen Flachbildschirmen ausstatten, wenn die Querträger in ihrer Länge und/oder ihrer Position zu den Seitenträgern verstellbar sind. Durch diese Gestaltung können unterschiedliche Flachbildschirme durch eine entsprechende Auswahl oder Einstellung derart eingestellt werden, dass die Vorderseite des jeweiligen Flachbildschirms mit den Seitenträgern abschließt.

Die Montage des erfindungsgemäßen Bildschirmständers gestaltet sich besonders einfach, wenn die Seitenträger Taschen zur Aufnahme von Rändern der Blende, eine Rückwand und/oder des Rahmens des Flachbildschirms haben.

Zur weiteren Vereinfachung der Montage des erfindungsgemäßen Bildschirmständers trägt es bei, wenn die Seitenträger einander zugewandte Längsführungen aufweisen und wenn die Querträger in den Längsführungen befestigt sind.

Der erfindungsgemäße Bildschirmständer lässt sich in mehreren beliebigen Größen einfach zusammenstellen, wenn die Seitenträgerabschnitte in den Längsführungen und/oder zweiten Längsführungen des benachbarten Seitenträgerabschnitts befestigt sind. Hierdurch hat der erfindungsgemäße Bildschirmständer zudem eine besonders hohe Stabilität.

Zur weiteren Erhöhung der Stabilität des erfindungsgemäßen Bildschirmständers trägt es bei, wenn die Seitenträger ein geschlossenes Kastenprofil aufweisen.

Der erfindungsgemäße Bildschirmständer weist eine glatte Oberfläche auf, wenn die zweiten Längsführungen an der Innenseite des Kastenprofils der Seitenträger angeordnet sind.

Die Seitenträger vermögen zum Erscheinungsbild des erfindungsgemäßen Bildschirmständers deutlich beitragen, wenn die Seitenträger an ihrer Außenseite eine Längsnut zur Aufnahme einer Lichtleiste aufweisen.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine perspektivische Darstellung eines erfin- dungsgemäßen Bildschirmständers mit einem Flachbildschirm,
- Fig. 2: eine Halterung des Bildschirmständers aus Fi- gur 1,
- Fig. 3: eine Anbindung von Querträgern an Seitenträ- gern der Halterung des Bildschirmständers in einer gestreckten Darstellung,
- Fig. 4: eine Draufsicht auf die Halterung des Bild- schirmständers mit dem Flachbildschirm,
- Fig. 5: eine weitere Ausführungsform der Halterung des Bildschirmständers,
- Fig. 6: eine Ausführungsform des erfindungsgemäßen Bildschirmständers mit einem Zwischenelement,
- Fig. 7: eine weitere Ausführungsform des erfindungs- gemäßen Bildschirmständers mit einem Zwi- schenelement,
- Fig. 8: eine Ausführungsform des erfindungsgemäßen Bildschirmständers mit einem Kopfelement,
- Fig. 9: eine weitere Ausführungsform der Halterung des Bildschirmständers,
- Fig. 10: eine vergrößerte Darstellung der Verbindung zweier Seitenträgerabschnitte der Halterung des Bildschirmständers aus Figur 9,
- Fig. 11: eine Schnittdarstellung eines Seitenträgers der Halterung aus Figur 9 mit angrenzenden Bereichen eines Blechs und einer Rückwand des Bildschirmständers.

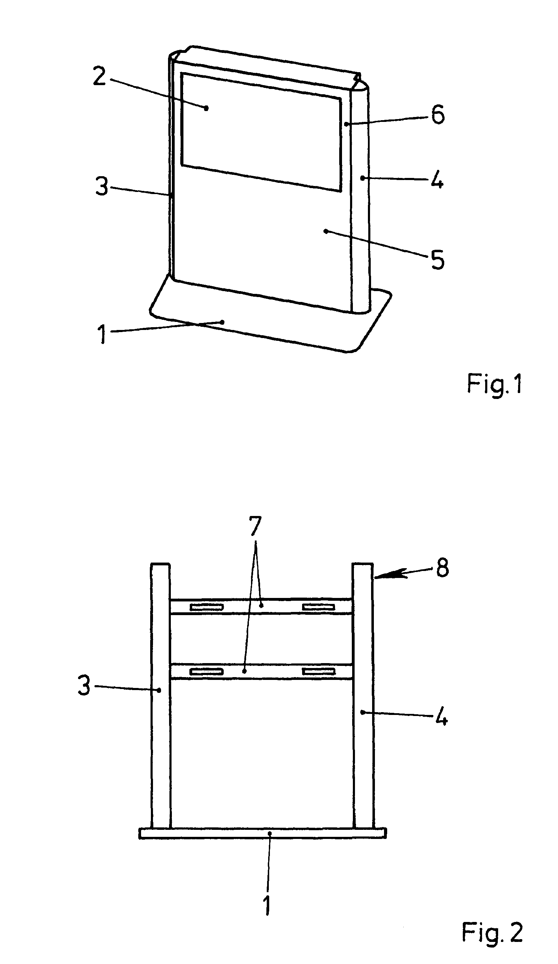

Figur 1 zeigt eine Vorderseite eines Bildschirmständers mit einem Fuß 1 und mit einem Flachbildschirm 2. Der Bildschirmständer weist sich über seine gesamte Höhe erstreckende Seitenträger 3, 4 und eine zwischen Flachbildschirm 2 und Fuß 1 angeordnete Blende 5 auf. Die Seitenträger 3, 4 schließen bündig mit der Blende 5 und einem den Flachbildschirm 2 einfassenden Rahmen 6 ab. Ein nicht dargestellter rahmenloser Flachbildschirm könnte selbstverständlich unmittelbar mit den Seitenträgern 3, 4 abschließen. Die Blende 5 kann als Anzeigetafel ausgebildet sein und zusätzliche Informationen anzeigen.

Figur 2 zeigt den Bildschirmständer aus Figur 1 ohne Blende 5 und Flachbildschirm 2. Hierbei ist zu erkennen, dass die Seitenträger über Querträger 7 miteinander verbunden sind. Die Seitenträger 3, 4 und die Querträger 7 bilden eine Halterung 8 für den in Figur 1 dargestellten Flachbildschirm 2.

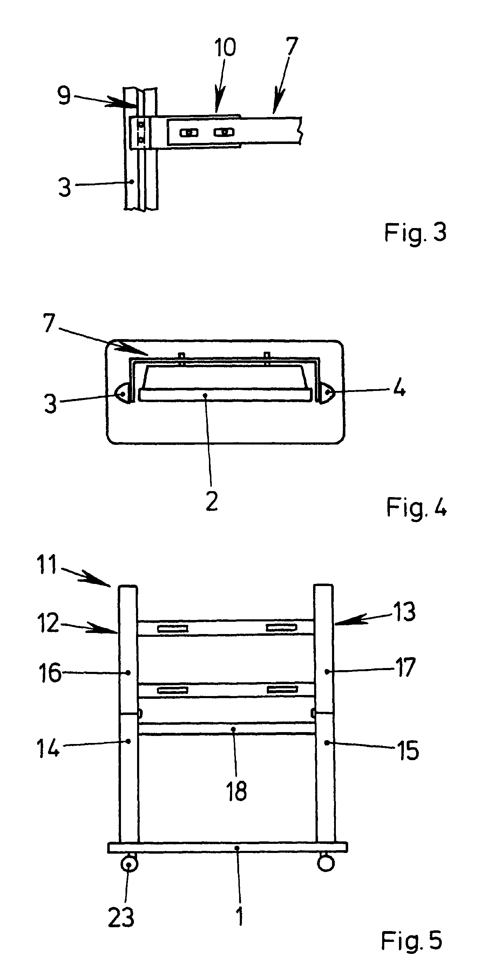

Der Anschluss der Querträger 7 an einem der Seitenträger 3 aus Figur 2 ist in Figur 3 in einer vergrößerten Darstellung dargestellt. Zur Vereinfachung der Zeichnung ist der Anschluss der Querträger 7 gestreckt dargestellt, so dass die dem Querträger 7 zugewandte Seite des einen Seitenträgers 3 sichtbar ist. Hierbei ist zu erkennen, dass der Seitenträger 3 eine Längsführung 9 aufweist, in der der Querträger 7 befestigt ist. Der Querträger 7 hat zudem Verstellmittel 10 zu seiner Verstellung in der Länge.

Figur 4 zeigt eine Draufsicht auf den Anschluss des Querträgers 7 an Seitenträgern 3, 4 mit dem Flachbildschirm 2. Hierbei ist zu erkennen, dass der Querträger 7 den Flachbildschirm 2 derart hält, dass er genau zwischen den Seitenträgern 3, 4 angeordnet ist. Die Rückseite des Bildschirmständers und damit die von dem Flachbildschirm 2 abgewandte Seite der Querträger 7 können mit einer nicht dargestellten Blende verdeckt sein.

Figur 5 zeigt eine weitere Ausführungsform einer Halterung 11 des Bildschirmständers. Diese Halterung 11 hat unterteilte Seitenträger 12, 13, und damit dem Fuß 1 nahe Seitenträgerabschnitte 14, 15 und auf der Höhe des in Figur 1 dargestellten Flachbildschirms 2 angeordnete Seitenträgerabschnitte 16, 17. Diese Halterung 11 hat zudem im Vergleich zu der aus Figur 4 einen weiteren, die unteren Seitenträgerabschnitte 14, 15 miteinander verbindenden Querträger 18. Der Fuß 1 weist Rollen 23 auf.

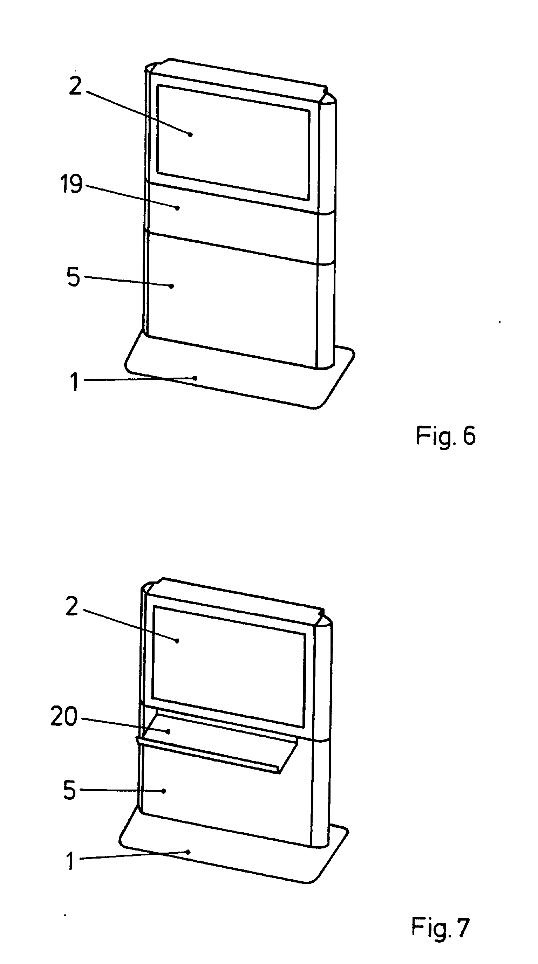

Figur 6 zeigt eine weitere Ausführungsform des Bildschirmständers, welches zwischen der nahe am Fuß angeordneten Blende 5 und dem Flachbildschirm 2 ein ebenes Zwischenelement 19 aufweist. Mit diesem Zwischenelement 19 lässt sich beispielsweise eine weitere Funktion des Bildschirmständers erzeugen oder die Höhe des Flachbildschirms 2 einstellen.

Figur 7 zeigt eine weitere Ausführungsform des Bildschirmständers, bei dem zwischen dem Flachbildschirm 2 und der dem Fuß 1 nahen Blende 5 ein als Ablage ausgebildetes Zwischenelement 20 angeordnet ist.

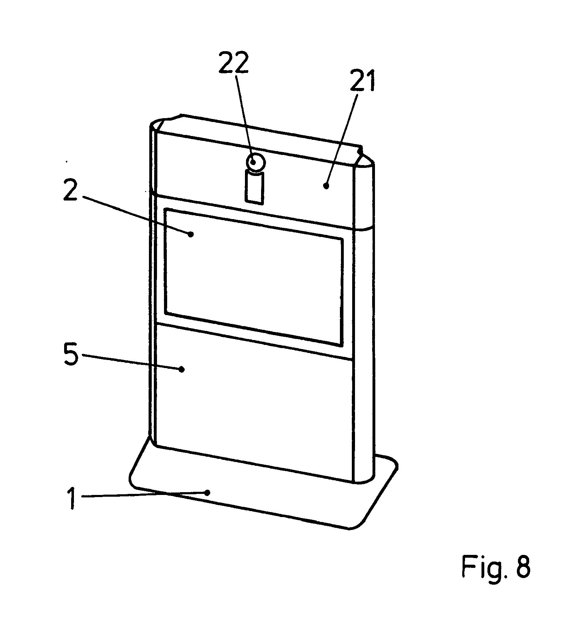

Figur 8 zeigt eine weitere Ausführungsform des Bildschirmständers, bei dem auf der Oberseite des Flachbildschirms 2 ein Kopfelement 21 angeordnet ist. Das Kopfelement 21 weist eine Kamera 22 auf.

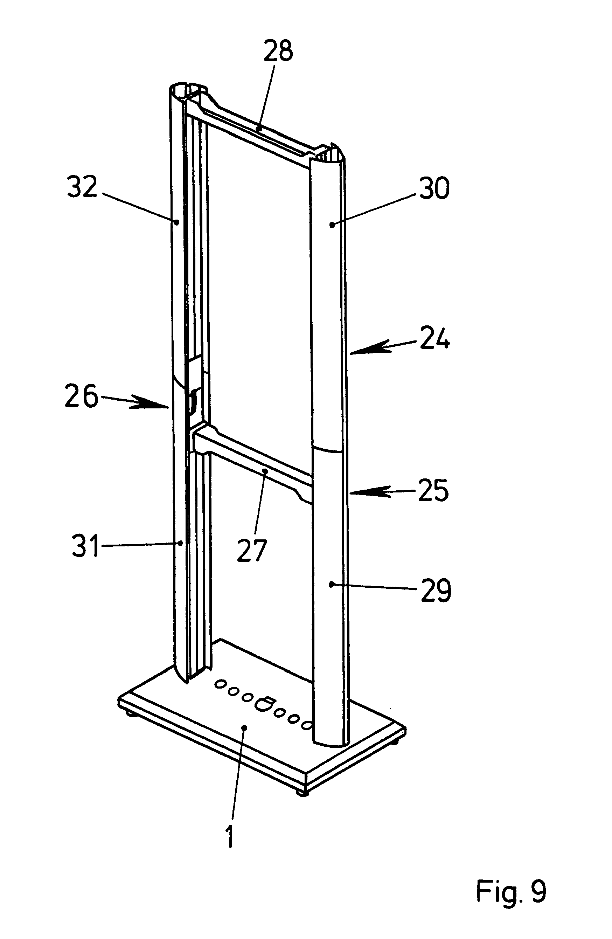

Figur 9 zeigt eine weitere Ausführungsform einer Halterung 24 des Bildschirmständers mit zwei Seitenträgern 25, 26 und zwei Querträgern 27, 28. Die Seitenträger 25, 26 weisen jeweils Seitenträgerabschnitte 29 - 31 auf.

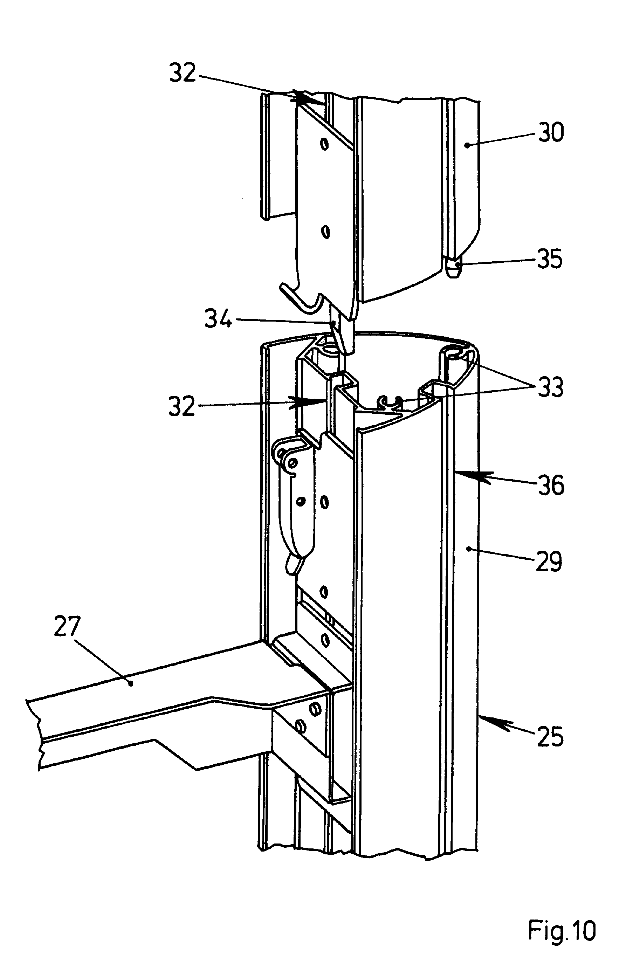

Figur 10 zeigt zwei der Seitenträgerabschnitte 29, 30 bei ihrer Verbindung. Die Seitenträgerabschnitte 29, 30 weisen jeweils erste, dem Querträger 27 zugewandte Längsführungen 32 und zweite, in einem Kastenprofil angeordnete Längsführungen 33 auf. Die Querträger 27 sind in den ersten Längsführungen 32 befestigt. Die Seitenträgerabschnitte 29, 30 weisen zudem Bolzen 34, 35 auf, mit denen sie über die ersten und zweiten Längsführungen 32, 33 miteinander verbunden sind. Weiterhin zeigt Figur 10, dass die Seitenträger 25 an der Außenseite eine Längsnut 36 zur Aufnahme einer nicht dargestellten Lichtleiste aufweisen.

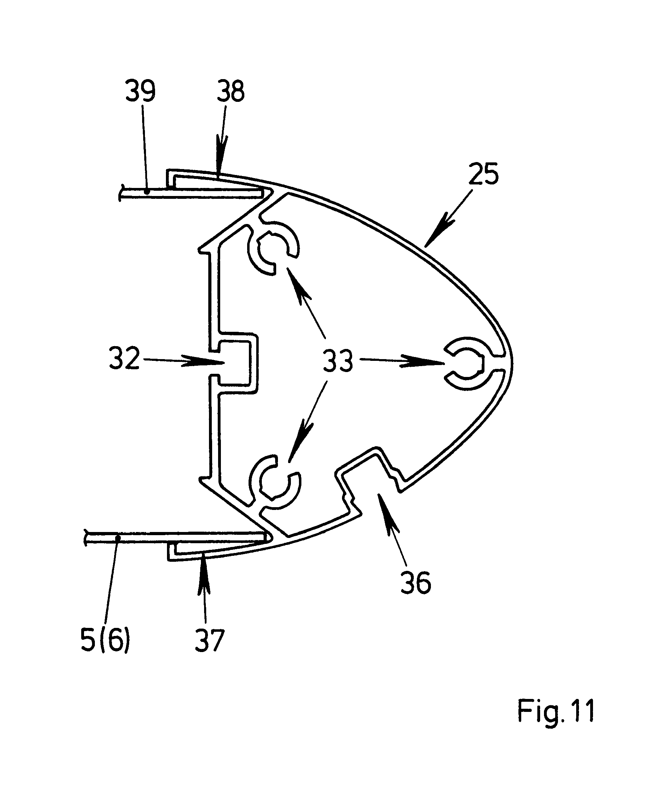

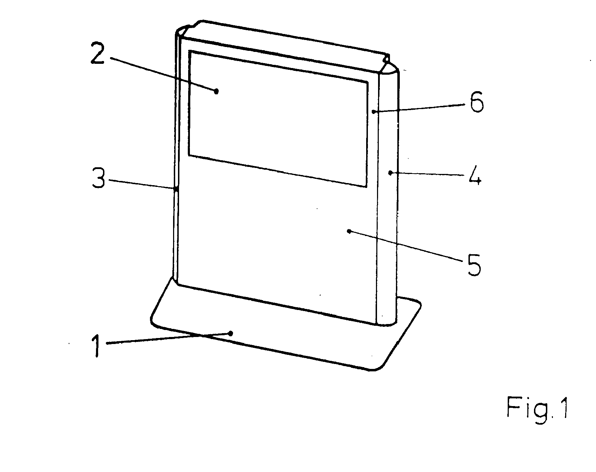

Figur 11 zeigt einen Querschnitt des Profils eines der Seitenträger 25 der Halterung 24 aus Figur 9 mit den beiden Längsführungen 32, 33 und der Längsnut 36. Der Seitenträger 25 hat Taschen 37, 38 zur Aufnahme von Rändern der Blende 5 des Rahmens 6 und einer Rückwand 39 des Bildschirmständers.

## Patentansprüche

1. Bildschirmständer mit einem Flachbildschirm (2), mit einem Fuß (1) und mit einer Halterung (8, 11, 24) zur Abstützung des Flachbildschirms (2) auf dem Fuß, **dadurch gekennzeichnet, dass** die Halterung (8, 11, 24) zwei den Flachbildschirm (2) seitlich einfassende Seitenträger (3, 4, 12, 13, 25, 26) hat, dass die Seitenträger (3, 4, 12, 13, 25, 26) über Querträger (7, 18, 27, 28) miteinander verbunden sind, und dass auf einer Vorderseite ein Abschnitt zwischen Flachbildschirm (2) und Fuß (1) eine Blende (5) aufweist.

2. Bildschirmständer nach Anspruch 1, **dadurch gekennzeichnet, dass** die Blende (5) eine Anzeigetafel aufweist.

3. Bildschirmständer nach Anspruch 1 oder 2, **dadurch gekennzeichnet, dass** die Seitenträger (12, 13, 25, 26) zumindest zwei lösbar miteinander verbundene Seitenträgerabschnitte (14 - 17, 29 - 31) haben, dass einer der Seitenträgerabschnitte (16, 17, 30, 32) sich über die Höhe des Flachbildschirms (2) erstreckt und der andere der Seitenträgerabschnitte (14, 15, 29, 31) mit dem Fuß (1) verbunden ist.

4. Bildschirmständer nach einem der vorhergehenden Ansprüche, **dadurch gekennzeichnet, dass** ein Zwischenelement (19, 20) zwischen den Seitenträgerabschnitten (14 - 17, 29 - 31) eingesetzt ist und den Flachbildschirm (2) von der darunter liegenden Blende (5) trennt.

5. Bildschirmständer nach einem der vorhergehenden Ansprüche, **dadurch gekennzeichnet, dass** ein Kopfelement (21) auf den vom Fuß (1) abgewandten Enden der Seitenträger (3, 4, 12, 13, 25, 26) befestigt ist und bündig mit dem Flachbildschirm (2) abschließt.

6. Bildschirmständer nach einem der vorhergehenden Ansprüche, **dadurch gekennzeichnet, dass** die Querträger (7, 18, 27, 28) in ihrer Länge und/oder ihrer Position zu den Seitenträgern (3, 4, 12, 13, 25, 26) verstellbar sind.

7. Bildschirmständer nach einem der vorhergehenden Ansprüche, **dadurch gekennzeichnet, dass** die Seitenträger (25, 26) Taschen (37, 83) zur Aufnahme von Rändern der Blende (5) einer Rückwand (39) und/oder des Rahmens (6) des Flachbildschirms (2) haben.

8. Bildschirmständer nach einem der vorhergehenden Ansprüche, **dadurch gekennzeichnet, dass** die Seitenträger (3, 4, 25, 26) einander zugewandte Längsführungen (9, 32) aufweisen und dass die Querträger (7, 27, 28) in den Längsführungen (9, 32) befestigt sind.

9. Bildschirmständer nach einem der vorhergehenden Ansprüche, **dadurch gekennzeichnet, dass** die Seitenträgerabschnitte (29 - 31) in den Längsführungen (32) und/oder zweiten Längsführungen (33) des benachbarten Seitenträgerabschnitts (29 - 31) befestigt sind.

10. Bildschirmständer nach einem der vorhergehenden Ansprüche, **dadurch gekennzeichnet, dass** die Seitenträger (3, 4, 12, 13, 25, 26) ein geschlossenes Kastenprofil aufweisen.

11. Bildschirmständer nach einem der vorhergehenden Ansprüche, **dadurch gekennzeichnet, dass** die zweiten Längsführungen (33) an der Innenseite des Kastenprofils der Längsträger (25, 26) angeordnet sind.

12. Bildschirmständer nach einem der vorhergehenden Ansprüche, **dadurch gekennzeichnet, dass** die Seitenträger (25, 26) an ihrer Außenseite eine Längsnut (36) zur Aufnahme einer Lichtleiste aufweisen.
